# EUROPEAN PATENT APPLICATION

(11) **EP 3 922 463 A1**
(43) Date of publication of application: **15.12.2021**
(21) Application number: 21189484.5
(22) Date of filing: 02.11.2017
(51) Int. Cl.: B41F 17/00, B41F 17/18, B41F 17/20, B41J 3/407

(54) **PRINTING PROCESS**

(30) Priority: 02.11.2016 EP 16196965; 02.11.2016 EP 16196963; 02.11.2016 EP 16196962; 02.11.2016 EP 16196961
(62) Divisional of application: 17797115.7
(71) Applicant: Tonejet Limited, Royston, Hertfordshire SG8 6EE (GB)
(72) Inventor: SHARP, John Lawton, Royston, SG8 6EE (GB); INGHAM, Ian Philip Butler, Royston, SG8 6EE (GB); WOODS, Jeffrey Mark, Royston, SG8 6EE (GB); EDWARDS, Simon John, Royston, SG8 6EE (GB)
(74) Representative: Gill Jennings & Every LLP

(57) **Abstract**

A method of moving objects along a track during a printing process comprises: moving, along a track (102), a first carrying device (104) configured to carry a first object (108) into the vicinity of a first processing station (106) configured to perform a first process; moving, along the track (102), the first carrying device (104) into an idle waiting area (402), while moving a second carrying device (104) configured to carry a second object (108) into the vicinity of the first processing station (106); and moving, along the track (102), the first carrying device (104) to a second processing station (106) configured to perform a second process, while at the same time moving the second carrying device (104) to a third processing station (106) also configured to perform the second process.

## Description

The present invention relates to a printing process, in particular a method of moving objects along a track during a printing process. Also disclosed is a printing apparatus in which objects are carried between processing stations including at least one printing station for printing an image onto the surface of an object.

### BACKGROUND TO THE INVENTION

Many industries require high volume complex printing processes in which a large number of objects are processed in a succession of treatments. For example, each object in such a process might receive several ink depositions and finishing treatments. One example of such an industrial printing process is digital can printing, in which high resolution digital images are applied to the bodies of cylindrical cans in a sequence of printing operations.

A known problem in the field of high volume complex printing processes is how to arrange processing stations and carrying devices for the objects in such a way as to maximize the rate at which objects are printed (throughput) while minimizing the physical space required for the apparatus.

In order to process a large number of objects efficiently, industrial printing processes typically involve performing different operations on a number of objects simultaneously. The objects are carried through a succession of processing stations in a staggered progression, with each object undergoing a different process to the other objects at any one time. Processes typically include the loading and unloading of objects, inspection, the application of one or more ink depositions, drying and the application of an over print varnish.

A known apparatus for carrying objects between printing stations is a mandrel wheel system (also known as a spindle disc). In mandrel wheel systems, a plurality of mandrels are fixed at an equal spacing around a rotating or indexing wheel. The wheel indexes through a sequence of incremental rotations, during which objects are carried by mandrels from station to station. In each incremental rotation of the wheel, each mandrel is moved into the position previously occupied by a neighbouring mandrel. At any one time, an object at a given mandrel wheel is undergoing a process that was performed on an object at the neighbouring mandrel wheel during the previous step.

A problem with mandrel wheel systems is that the duration of each indexing step is limited by the slowest process in the sequence. Objects that are undergoing a relatively quick process must therefore be held inactive for some time while the slowest process is being completed. If, for example, the slowest process takes twice as long as a faster process, objects will be required to remain inactive at the faster processing station for twice the duration that the process takes to perform. This inactive time is a source of inefficiency in the printing process.

Mandrel wheel systems are also limited by the requirement that the minimum distance between neighbouring mandrels be at least as large as the length of the longest processing station. Hence the overall circumferential length is at least the length of the longest processing station multiplied by the number of processing stations. Where several processing stations have a smaller length than the longest station, it is necessary to provide redundant space between the smaller processing stations in order for the indexing to function. The additional size of the apparatus due to the redundant space is a further source of inefficiency in mandrel wheel printing systems.

There is a need for a printing apparatus that can overcome the problems with mandrel wheel apparatuses while retaining the advantages of high volume printing provided by staggered index processing.

### SUMMARY OF INVENTION

According to the present invention, there is provided a method of moving objects along a track during a printing process, the method comprising: moving, along a track, a first carrying device configured to carry a first object into the vicinity of a first processing station configured to perform a first process; moving, along the track, the first carrying device into an idle waiting area, while moving a second carrying device configured to carry a second object into the vicinity of the first processing station; and moving, along the track, the first carrying device to a second processing station configured to perform a second process, while at the same time moving the second carrying device to a third processing station also configured to perform the second process.

The above steps provide a method of printing on objects that allows parallel processes to take place in series with individual processes on a closed track, thus allowing for an increased throughput over known methods.

Preferably, the duration of the second process is greater than the duration of the first process.

Preferably, the method comprises moving a third carrying device configured to carry a third object from the vicinity of the first processing station into the idle waiting area, while the first and second carrying devices remain at the second and third processing stations respectively.

Preferably, the first process comprises at least one of: loading, inspecting, unloading, cleaning, surface energy modifying, printing, coating, drying, curing or fixing an object carried by a carrying device, and, preferably, wherein the second and third processing stations are printing stations and the second process comprises printing a single colour onto the surface of the object.

Preferably, the method comprises keeping the first and second carrying devices at the second and third processing stations while first and second objects held by the respective carrying devices are printed on.

Preferably, the method comprises moving the first and second carrying devices together into fourth and fifth processing stations each configured to perform a printing operation with the same single colour as each other, wherein the colour is not the same as the colour printed in the second and third processing stations; and printing onto the first and second objects held by the first and second carrying devices.

Preferably, the track is a closed track.

Also disclosed herein is a printing apparatus for printing onto objects is provided, the apparatus comprising: a plurality of carrying devices for carrying objects to be printed on, the carrying devices each comprising a rotatable handling device configured to hold and rotate an object; a track defining a path along which each of the plurality of carrying devices can be moved; a plurality of processing stations comprising locations at which carrying devices are stationary or moving while the carried objects undergo a process, arranged along the track and comprising at least one printing station; and a controller configured to independently control the position and speed of each of the carrying devices with respect to each other along the track.

This apparatus therefore allows objects to be moved for example between processing stations while other objects remain stationary.

The provision of an apparatus in which a plurality of carrying devices can be moved around a track independently of each other is advantageous over known printing systems as it enables printing systems in which processes requiring object movement can occur simultaneously with processes requiring a stationary object, printing systems in which the distance between neighbouring processing stations is not limited by the footprint of the largest processing stations, and printing systems in which parallel printing operations allow a throughput to be achieved that is not limited by the throughput of the slowest processing station, thereby enabling the most optimally compact machine design.

Preferably, the controller is configured to allow at least one of the plurality of carrying devices to be moved with a first speed, which may be zero speed, on the track while at least one other of the plurality of carrying devices is moved with a second speed on the track, wherein the second speed is not equal to the first speed.

Preferably, the plurality of processing stations further comprises one or more of: at least one drying station, at least one loading station, and at least one unloading station.

Preferably, the controller is configured to control the position and speed of each carrying device such that each carrying device is stationary or moved at a first speed while an object is printed on at the at least one printing station, and each carrying device is moved at a second speed through the at least one drying station, wherein the second speed is not equal to the first speed.

Preferably, the controller is configured to allow one of the plurality of carrying devices to be stationary or move at a first speed at a printing station while another of the plurality of carrying devices is moved at a second speed through a drying station.

Preferably, the handling device is arranged to rotate an object at at least one of the plurality of processing stations by coupling to a driving device at the at least one processing station such that torque is transmitted from the driving device to the handling device.

Preferably, the printing apparatus comprises a rail or pad mounted adjacent to the track and wherein the handling device comprises a wheel configured to contact the rail or pad as it moves along the track, thereby causing the handling device to rotate as it is moved along the track.

Preferably, the track forms a closed path on which the carrying devices can be moved.

Preferably, at least one of the processing stations is repeated on the track, thereby allowing multiple objects at different positions on the track to undergo the same process simultaneously.

Preferably, the controller is configured to move at least one carrying device such that it passes through, without processing, a first of a repeated processing station at which the carried object would normally be processed, and instead be processed at a second of the repeated processing station of the same type, thereby allowing the first processing station to be inoperative without interrupting operation of the apparatus.

Preferably, the plurality of processing stations comprises at least two printing stations that are disposed parallel to each other but positioned to be offset along their axis of printing.

Also disclosed herein is a method of using the printing apparatus described above, the method comprising moving a first carrying device along the track at a first processing station while a second carrying device remains stationary at a second processing station, wherein both carrying devices are disposed on the same track. In this way it is possible for the first processing station to process multiple objects while the second processing station is processing a single object.

Also disclosed herein is a method of operating a printing apparatus comprising: a plurality of carrying devices for carrying objects to be printed on, the carrying devices each comprising a rotatable handling device configured to hold and rotate an object; a track defining a path along which each of the plurality of carrying devices can be moved; a controller configured to independently control the position and speed of each of the carrying devices with respect to the track; and a plurality of processing stations arranged along the track and comprising at least one printing station, wherein at least one of the processing stations is repeated on the track, the method comprising: moving at least one carrying device such that it passes through, without processing, a first of a repeated processing station at which the carried object would normally be processed, and instead be processed at a second of the repeated processing station of the same type, thereby allowing the first processing station to be inoperative without interrupting operation of the apparatus.

By providing an apparatus having duplicated processing stations, and passing through selected processing stations without stopping, it is possible for the stations be deactivated during, for example, maintenance, servicing or replacement of a processing station, without interrupting operation of the apparatus.

The apparatus and method are applicable to a wide range of printing processes, including but not limited to conventional contact means (e.g. offset lithography and flexography), digital contact means (e.g. electrophotographic printing, digital offset printing and belt transfer printing) and digital non-contact means (e.g. inkjet printing, electrostatic inkjet printing and piezoelectric inkjet printing). Printing typically takes place at one or more printing stations that are arranged along the track. The printing stations typically form a subset of a greater number of processing stations arranged along the track, which may also include loading/unloading stations, drying stations, curing stations and other treatment stations.

In some embodiments of the invention different printing methods are combined. For example, a first printing station may use offset printing to apply a first printed layer to the object, such as a white base layer, while subsequent printing stations may use digital printing, such as inkjet, to print a process colour image on the surface of the object.

The apparatus and method described herein are applicable to print processes using one or more of a variety of inks, including but not limited to water based inks, hydrocarbon solvent based inks and UV curable inks. Colour printing may be performed according to a process colour model (e.g. CMYK and extended gamut models: Hexachrome, CMYKOGV, and CMYKRGB). Spot colour inks may be used, including white, metallic inks, fluorescent inks, clear coatings and functional inks (e.g. magnetic).

The following disclosure also provides examples of specific indexing schemes using the apparatus which provide an increased throughput and/or a reduced total size in comparison with equivalent systems using mandrel wheels.

The present disclosure describes printing processes with reference to printing on the body of necked or un-necked cylindrical monobloc containers, but the apparatus and method described herein is applicable to printing "direct to shape" on a wide range of objects including such as cans, bottles, tubes, pots, cups or other containers or caps (e.g. wine bottle screw caps). Materials that the object is made of may include metal, coated metal, pre-printed material, plastic, paper, card. The objects to be printed are preferably cylindrical but may be of other geometries.

Aspects of the present invention will now be described by way of example with reference to the accompanying figures.

### BRIEF DESCRIPTION OF THE FIGURES

Figure 1 is a schematic block diagram of printing apparatus according to the present disclosure.
Figure 2 is a schematic block diagram of printing apparatus according to the present disclosure.
Figure 3 is a schematic block diagram of printing apparatus according to the present disclosure.
Figures 4A-E illustrate an example of steps in a sequence performed during operation of the apparatus shown in Figure 3 in accordance with the invention.
Figure 5 is a schematic block diagram of printing apparatus according to the present disclosure.
Figures 6a and 6b are perspective views of a magnetic rotation coupling used to drive the rotation of object handling devices in some of the printing apparatus.

### DETAILED DESCRIPTION OF EMBODIMENTS OF THE INVENTION

The present disclosure provides a printing apparatus and method of printing in which carrying devices are provided along a track and are independently moveable with respect to each other along the track. The use of independently moveable carrying devices provides the possibility for far more flexible indexing schemes than are possible in known devices.

The following disclosure provides examples of specific indexing schemes using the apparatus of the present invention which provide an increased throughput and/or a reduced total size in comparison with equivalent systems using mandrel wheels.

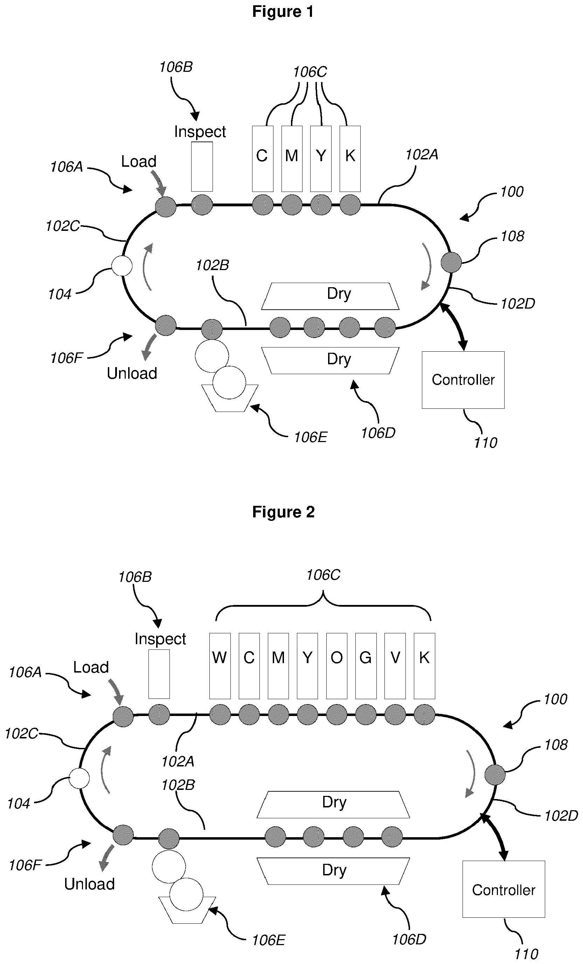

Figures 1 and 2 show examples of printing apparatuses 100 according to the present disclosure. In each example the apparatus comprises a track 102 on which a plurality of carrying devices 104 (hereafter "carriages") are disposed and along which the carriages 104 can move.

A plurality of processing stations 106 are arranged along the track 102, and each of the plurality of carriages 104 is configured to carry a container 108 successively into the vicinities of each of the processing stations 106. In the apparatus shown in Figure 1, the processing stations 106 comprise a loading station 106A, an inspection station 106B, four printing stations 106C which each print a different colour separation (cyan, magenta, yellow and black), a drying station 106D, a coating station 106E and an unloading station 106F. In the apparatus shown in Figure 2, the processing stations 106 comprise a loading station 106A, an inspection station 106B, eight printing stations 106C which each print a different colour separation (white, cyan, magenta, yellow, orange, green, violet and black), a drying station 106D, a coating station 106E and an unloading station 106F. Each processing station is configured to perform a process on one container 108 at a time, other than the drying station 106D which may process up to five containers 108 simultaneously.

The series of processing stations 106 of Figures 1 and 2 are chosen to provide a printing apparatus in which objects 108 are loaded, inspected, printed upon using a four or eight separation printing process, dried, coated and unloaded. The skilled person will understand, however, that the number, type and order of processing stations described with reference to this figure and the following figures can be varied within the scope of the present disclosure for use in other applications. Examples of further types of processing stations that may be used within the scope of the present disclosure are cleaning (contact or non-contact), pre-coating, pre-treatment for modifying surface energy such as plasma or flame treatment, curing of a coating or print, and fixing of print.

In some examples, the apparatuses of Figures 1 and 2 comprise a cleaning station (not shown) before the printing stations 106C for removing dust or other dirt from objects before printing. The cleaning station may be positioned before the inspection station 106B, after the inspection station 106B or may be combined with the inspection station 106B. The cleaning station may comprise an air-knife cleaner for removing dust particles from the surface of the object.

In some examples, the apparatuses of Figures 1 and 2 comprise a print quality inspection station (not shown) positioned after the printing stations 106C. The print quality inspection station comprises one or more cameras arranged to inspect the quality of the print applied at the printing stations 106C.

A control device 110 communicates with each of the carriages 104, either directly or via the track 102, in order to control the position and speed of each of the carriages 104 independently with respect to the track 102.

Each carriage 104 is coupled to the track 102 firstly by means of a constraining force and secondly by means of a motive force. The constraining force requires the carriage to move only along the path of the track 102 and allows the carriage 104 to be guided along the track with high precision. In some examples carriage 104 comprises linear bearings that engage with the track. The engagement between the linear bearings 104 and the track 102 constrains the motion of the carriage 104 to one degree of freedom.

In this example, the motive force between the carriage 104 and the track 102 is provided by a magnetic linear motor system. The carriages 104 comprise permanent magnet elements that couple electromagnetically to a system of electromagnets spaced around the track 102. A position sensing system measures the position of each carriage 104 on the track 102 and a control device 110 is used to control the position, speed and acceleration of each carriage 104 on the track 102 by controlling the magnetization of the electromagnets spaced along the track 102. The control device 110 will typically be programmed to move the carriages 104 between processing stations 106 according to a predetermined sequence, with the amount of time that each carriage 104 spends at each station 106 being determined in advance.

In some examples the motive coupling between the carriages 104 and the track 102 may not be via a magnetic linear motor system and may instead be via another system that allows each carriage to move independently with respect to the track 104. In one alternative example, individually controllable rotational wheels are mounted on each carriage 104 and are in contact with the track 102. In another alternative example, the carriages 104 are mechanically coupled to a track 102 using a clutch system that allows each carriage speed to be variably controlled. In the above described alternative examples, the controller may communicate directly with the carriages 104 via a wireless interface or may communicate via active or passive transponders embedded in the track.

Examples of suitable track systems for use in the present invention are Precision Track Systems from HepcoMotion and the iTRAK Intelligent Track System produced by Rockwell Automation.

According to the example of Figure 1, the track 102 forms a closed path, which allows carriages 104 to make repeated loops of the path without a delay at the end of a cycle while the carriage 104 returns to its start position. In this example the track 102 is substantially disco-rectangular in shape, having two horizontal linear sections, 102A and 102B, that are vertically offset from each other. A first end of the upper linear section 102A is connected to a first end of the lower linear section 102B by a semi-circular arc 102C that lies in a substantially vertical plane. Similarly, a second end of the upper section 102A is connected to a second end of the lower section 102B by another such arc 102D. Other shapes of closed track 102 are possible and may be beneficial depending on the requirements of the processes being used (e.g. as a result of preferred orientations of operations of processing apparatuses). In some other examples, the track may have vertical linear sections along which processing stations are arranged, and which are connected to each other at their top and bottom by semi-circular arc sections. In other examples, linear sections may not be parallel nor lie in the same plane.

The carriages 104 comprise handling devices which in this example are rotating mandrels adapted to carry containers. Each mandrel is mounted to its respective carriage 104 via bearings that allow the mandrel to rotate around its central axis, and thereby rotate an attached container about its central axis, which is coaxial with the mandrel.

In some examples, the handling devices may be adapted to carry objects using a holding device such as internal or external retaining clips or neck holding chucks. The holding devices may be adapted for holding other objects to be printed on.

Handling devices are capable of rotating about their axes when driven. The drive for rotating a handling device may be achieved in a variety of ways, including a servo motor mounted on the carriage, powered and controlled via connections to the carriage via a power track, data track or wireless means. Alternatively the carriages 104 may be passive, whereby drive to the handling device is achieved by coupling rotational motion to the handling device from a drive device not located on the carriage. Preferably the carriages 104 are passive requiring no external services in the form of electrical supply, control wiring, pneumatic or other connections to retain the object.

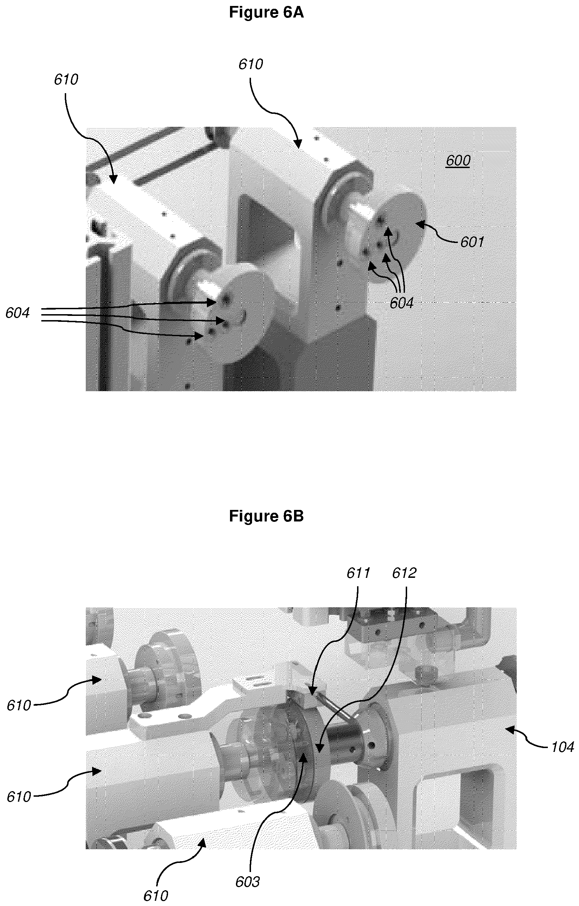

Coupling of rotational motion to the mandrels (or other handling devices) is provided at processing stations 106 where the process requires the object to be rotated. The drive (the source of the rotational motion) may be an individual servo motor, a geared or belt drive from a common motor that serves a number of adjacent stations, a stator coil that generates a rotating magnetic field, etc. The coupling may be provided by a mechanical or by a magnetic force, or a combination of these. This feature is discussed in more detail with reference to Figure 6.

The drying station 106D may comprise an air pump or fan for forcing air over the surface of a printed object in order to evaporate liquid in the deposited ink and extracting evaporated vapour.

In other examples a pinning or curing station may be provided instead of or in addition to the drying station 106D. In some examples the pinning or curing station includes a means for providing one or more of infrared radiation, ultraviolet radiation and induction heating to the surface of a printed object.

The drying station 106D may extend along a section of the track 102 wherein objects are controlled to move continuously through the drier, rather than indexed between discrete positions. Drying 106D or pinning or curing stations may be placed between printing stations 106C if the printing process requires that ink is dried, pinned or cured between the printing of different colour separations.

The coating station 106E applies a layer of over print varnish (OPV) over the surface of the printed and dried object. The varnish may be applied by means of a roller or a spray coater. The OPV itself imparts beneficial properties to the printed object such as gloss, abrasion resistance, etc, and may be chosen for compatibility with the object surface material and inks. The varnish may be thermally curing, UV curing, etc., and curing may be performed partially or completely as part of the apparatus or by a separate curing oven downstream of the apparatus.

As a carriage 104 performs a single loop of the track 102, it visits selected processing stations 106 sequentially. The steps set out below describe an example of a series of processes that are undergone in relation to one carriage during a single loop of the track 102 in the examples shown in Figures 1 and 2.

After unloading a printed container at the end of a previous cycle, the carriage 104 is brought into the vicinity of a loading station 106A and stopped while an unprinted container 108 is brought to the loading station 106A by a conveyor (not shown). The container 108 is presented in coaxial alignment with the mandrel of the carriage 104 and transferred onto the mandrel of the carriage 104.

From the loading station 106A, the carriage 104 carries the container to an inspection station 106B comprising a defect inspection device. The carriage 104 stops again at the inspection station 106B where the container 108 is then rotated through at least one complete revolution of the mandrel. During this rotation, the defect inspection device checks for any deformities or contaminants on the surface of the container 108 that could be detrimental to the printing process. Rotation of the container 108 is achieved by a magnetic coupling between the rotating motion of a drive device located at the inspection station 106B and the mandrel/handling device, which is engaged when the carriage 104 is stopped at the inspection station 106B. The inspection device may be an optical camera system, an electrically conducting bar with an electrical current detection system, or any other suitable surface inspection device. If a defect is detected the container 108 is ejected from the mandrel at the inspection station 106B. Before moving on, the mandrel may be checked to ensure the object has been unloaded successfully, whereafter the empty mandrel continues through the apparatus in the normal way except that the processing steps at each process station are disabled for the empty mandrel.

After a successful inspection, the carriage 104 and the container 108 are moved to a first printing station 106C. There the container 108 is rotated on the mandrel with a speed and number of revolutions appropriate to the printing process employed while the printing process takes place. As described above, the printing process is not constrained to any one method, but may include any suitable printing process that is adapted for, or capable of, printing onto containers. These may be a conventional contact printing method such as offset lithography, flexography or rotary screen printing, or a digital method such as electrophotography or non-contact ink jet printing. For the example of an inkjet method of printing in which a printhead has ejectors spaced more widely than the printed pixels on the container surface, the container 108 is rotated over multiple complete revolutions while the carriage is at the printing station. During each revolution of the container 108, as the printhead is ejecting ink in accordance with the image to be printed, the printhead is moved in a direction parallel to the axis of the container for a distance of one pixel spacing. This continues over the multiple revolutions of the container 108, resulting in full image coverage on the container 108 surface from multiple interleaved passes of the container surface beneath the printhead. During other processes, a different number of revolutions may be required.

As with the inspection station 106B, rotation of the container 108 at a printing station 106C is performed by coupling the rotating motion or torque of a drive located at the printing station 106C to the handling device when the carriage is at the printing station 106C.

Registration of the print with the container 108 surface position is performed at a printing station 106C by controlling the synchronisation of the printhead or print device in accordance with position signals obtained by a non-contact read-head 611 reading the angular position of a rotary incremental encoder ring 612 mounted on the handling device.

The encoder ring 612 has encoded thereon information that can be used to infer the angular position of the handling device and, hence, the angular position of a container 108 thereon. A stationary read-head 611 is mounted separately at a fixed position with respect to the track 102 at a printing station 106C, where the handling device is rotated by coupling to a drive device. The read-head 611 is configured to read the angular position data encoded in the encoder ring 612, when the carriage 104 is in a position on the track 102 whereby the encoder ring 602 aligns with the read head 611, and provide information to the control device 110. Suitable encoder devices are the TONiC^{™} optical read-head and RESM rotary encoder ring manufactured by Renishaw pic.

The use of stationary read-heads automatically provides the process controller at a given processing station the real-time data it needs about the position of the container 108 currently at that station 106 without the need to switch data permanently associated with a particular carriage 104 between processing stations 106 as it progresses through the apparatus. It further eliminates the need for power or data connections to the carriage 104 for the purposes of reading the angular position of the container 108 at a processing station 106.

The arrangement of a stationary read-head at a print station 106C, reading from an encoder ring 612 on the carriage 104, automatically compensates for errors in linear position of the carriage 104 at a print station 106C, if the encoder ring is the same diameter as the object being printed. This is because a small translational error or movement along the track that moves the axis of the object relative to the printhead, which would otherwise lead to a print registration error, appears to the read-head in the same way as a rotation of the encoder ring 602 by the same tangential distance. Therefore, no print registration error results from a small translational error of the carriage position at a printing station.

The carriage 104 and container 108 are then moved to subsequent printing stations 106C at which subsequent print operations are carried out sequentially on the container 108. The subsequent print operations may use the same or different print method to the initial print operation in order to add further process colour separations or spot colours. The subsequent printing stations 106C may act to increase the width of the print beyond the width of a single print station by having a second print station of the same colour ink as the first but displaced with respect to the first in a direction along the axis of printing (the axis of printing being defined here as the direction of the line of an array of ejectors or nozzles of a printhead or contact line with the container of a print roller, etc.) In general, the sequence of printing stations 106C that operate on a container may comprise a variety of printing methods to achieve a desired effect. Control of the rotation and registration of the print to the container 108 surface are performed at each printing station 106C in the same manner as in the first printing station 106C.

In examples in which a print quality inspection station is provided after the printing stations 106C, the object may be rotated at a lower rotational velocity at the print quality inspection station than at the printing stations 106C (for example, 3 rps compared with 5 rps) in order to account for a camera data acquisition speed that is lower than the print speed.

Once printed, the carriage 104 and container 108 pass through a drying station 106D. The dryer 106D may be implemented such that the carriages 104 carrying the printed containers 108 move continuously through the dryer 106D rather than halting in one or more stations. Drying in this example is by airflow, but other examples may use heated air, infra-red radiation, induction heating of the container body, ultraviolet radiation, etc. Because the carriages 104 of the present disclosure are independently moveable, it is possible for one carriage 104 to pass continuously through a drying station 106D while other carriages 104 are stopped at other processing stations 106.

In one example, containers 108 are rotated as the carriages 104 move through the dryer by the rolling contact of a wheel mounted on each handling device with a rail mounted parallel with the track. The wheel is turned by its rolling contact with the rail as the carriage moves along the track, thereby causing the container 108 to rotate. Such a rail may be mounted at any position on the track at which it is desirable to rotate the container 108 as the carriage moves along the track. A short rail or pad may also be usefully positioned prior to a station 106 at which a handling device is rotated by a driving device 610, in order to provide some initial angular momentum in the direction of rotation to provide a faster synchronisation of the coupling at the station 106.

Following the drying process, the carriage 104 and printed container 108 are brought to a coating station 106E where an over-print varnish (OPV) is applied. The varnish is applied by a roller that transfers a controlled layer of OPV from an anilox roller to the container 108 surface. During this operation the container 108 is rotated at least one complete revolution via the magnetic coupling in the same manner as at the inspection station. The OPV is typically a thermally curable formulation, which, when dried and cured, gives the print a high degree of protection from handling and abrasion.

The carriage 104 and the container 108 are then moved to the unloading station 106, at which the printed container 108 is removed from the mandrel. In some examples the printed container is transferred onto a vacuum type belt (not shown) that conveys the printed and varnished containers 108 to a curing oven, which is separate to the apparatus for curing of the OPV. After the printed container 108 has been unloaded from the carriage 104, the mandrel may be checked to ensure that the container has been properly unloaded, after which the empty carriage 104 returns to the loading station 106 to begin a subsequent cycle.

While the carriage 104 and container 108 are undergoing the processes described above, other carriages 104 and containers 108 undergo the same series of processes at staggered timing. Thus, while one or more containers 108 are positioned at printing stations 106C, other containers will be at the inspection 106B and loading 106A stages of the sequence. In general, each container 108 visits each processing station 106 in sequence. Each processing station 106 is also visited by each container 108 in the order that the containers 108 are added to the system. In order to maximise efficiency of the processes, each processing station 106 should be active for as great a proportion of the time as possible.

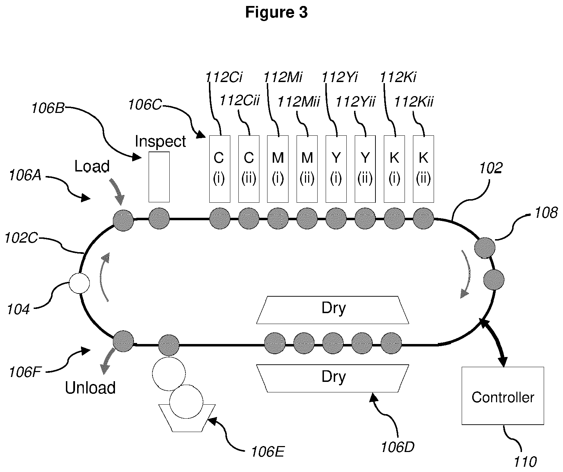

The above described apparatus and method are advantageous over the mandrel wheel device described in the background section. The above device allows one container 108 to be moved continuously through a drying station while other containers are held at printing stations 106. This provides greater flexibility in terms of possible simultaneous processes than in previously known devices. The above apparatus and process also allow for a system in which the distance between neighbouring processing stations 106 is not limited by the footprint of the largest processing station 106. This is possible because the distance between the individually controlled carriages 104 can be varied around the track. Figure 3 shows an embodiment of the present invention in which processing stations 106 that have a slower processing cycle (i.e. which require a longer time over which to perform a process on a container) are repeated along a path, while processing stations 106 with a faster processing cycle are not repeated. Rather than sequentially visiting each of the processing stations 106 in an apparatus, a carriage 104 stops at every non-repeated processing station 106, but passes through some repeated processing stations 106 without stopping. This provides a system in which more than one container 108 may undergo the same process simultaneously at repeated processing stations 106, which allows slower processes to be performed in parallel on a track 102. By performing slower processes in parallel, while performing faster processes serially, the throughput of the print process is increased in comparison to printing apparatuses in which each container 108 visits every processing station 106.

The printing apparatus of Figure 3 comprises a loading station 106A, an inspection station 106B, eight printing stations 106C, a drying station 106D, a coating station 106E and an unloading station 106F provided along a track 102. In this example, the printing process performed by each printing station 6C has a greater duration than the loading process, the inspection process, the coating process and the unloading process. The drying process of a single container 108 may be slower than the printing process; but, because the drying station 106D is able to process up to five containers 108 simultaneously, it has a greater throughput than each of the printing stations 106C.

The eight printing stations 106C comprise four pairs 112 of identical stations 106C provided along the track 102. The first pair 112C comprises a first cyan printing station 112Ci and a second cyan printing station 112Cii. The second pair 112M comprises a first magenta printing station 112Mi and a second magenta printing station 112Mii. The third pair 112Y comprises a first yellow printing station 112Yi and a second yellow printing station 112Yii. The fourth pair 112K comprises a first black printing station 112Ki and a second black printing station 112Kii. (The order C-M-Y-K of the process colours may be chosen differently to suit the printing process used).

As each carriage 104 passes through the apparatus, it sequentially stops at the loading station 106A, the inspection station 106B, the coating station 106E and the unloading station 106E. Rather than stopping at each printing station 106C, a given carriage 104 stops at only the first or second printing station 106C of each pair 112 of printing stations. Consecutive carriages 104 stop at alternating printing stations 106C, such that if a leading carriage 104 stops at the first printing station 106C of each pair 112, the following carriage 104 will stop at the second printing station 106C of each pair 112, and the next carriage 104 will again stop at the first printing station 106C of each pair 112, and so on.

The above arrangement of printing stations 106C has a greater throughput than an equivalent apparatus in which each container 108 passes through every printing station 106C of the apparatus. Such a system is made possible by using a printing apparatus in which carriages 104 can be individually controlled. The provision of individually controllable carriages 104 allows a first set of containers 108 to be sequentially carried through a series of faster stations (or carried into an idle waiting area), while other containers 108 are held stationary (with respect to the track) in a slower processing station 106.

The skilled person will understand that the principles of the above described apparatus can be applied to systems having a different numbers of printheads, e.g. three sets of six printheads. The combinations of printheads 106 used in a given embodiment will depend on the relative processing times of different processes in the apparatus, as well as the specific goals of the user.

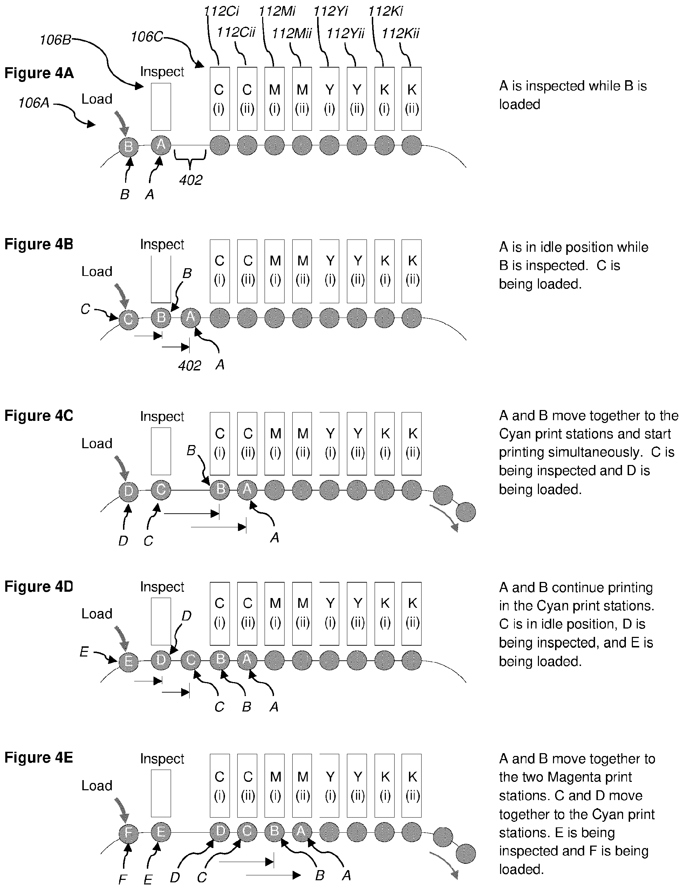

Figures 4A-E show the steps in which a plurality of carriages, A, B, C, D, E and F, carry a plurality of containers through the inspection station 6B and printing stations of the printing apparatus of Figure 3. The positions of carriages and containers shown in Figures 4A-E are shown in the sequence that they occur in a method according to an embodiment of the invention.

In Figure 4A, a first carriage, A, is stationary at the inspection station 106B where a first container that it is holding is inspected. At this time, a second carriage, B, is stationary at the loading station 106A where it is loaded with a second container.

In Figure 4B, carriage A is moved into idle position 402 and stopped, while the second container held by carriage B is inspected at the inspection station 106B. At this time, a third container is loaded onto a third carriage, C.

In Figure 4C, after the inspection of the second container is complete, carriages A and B are moved together to the pair of cyan printing stations 112C, with carriage A at the second cyan printing station 112Cii and carriage B at the first cyan printing station 112Ci. The cyan printing stations 112C begin printing on the first and second containers held by carriage A and carriage B respectively. At the same time, carriage C is moved to the inspection station 106B, where the third container inspected, and a fourth container is loaded onto a fourth carriage, D, positioned at the loading station 106A.

In Figure 4D, carriage C is moved into the idle position 402, while carriage D is moved to the inspection station where the fourth container is inspected. A fifth carriage E is moved to the loading station 106A where it is loaded with a fifth container. Because the printing process at the printing stations 112Ci and 112Cii has a longer duration than the loading and inspection processes, carriages A and B remain at, and continue printing, in the cyan printing stations 112Ci and 112Cii respectively.

In Figure E, the cyan printing process has been completed and carriages A and B are moved together to the pair of magenta printing stations 112M. At approximately the same time, the inspection of the fourth container is completed, and carriages C and D are moved together to the cyan printing stations, 112Ci and 112Ci, with carriage C moving from the idle position 402 to the second cyan printing station 112Cii and carriage D moving from the inspection station 106B to the first cyan printing station 112Ci without stopping in the idle position 402. At the same time, carriage E is moved to the inspection station 106B and a fifth carriage, F, is loaded with a fifth container at the loading station 106A.

For an apparatus in which processes are performed only in series, the total throughput of the apparatus is limited by the throughput of the slowest element.

For example, if the slowest process step is printing, having a stationary printing duration of 0.8 seconds and a time to index between printing stations of 0.2 seconds, the maximum throughput through the printing station, and therefore the entire apparatus, is 1 container per second (60 containers per minute).

By using parallel printing processes, the total throughput of the apparatus can be increased beyond the throughput of a slowest process in the cycle. Table A below shows a detailed example of a process sequence using the printing apparatus of Figure 3 to perform slow processes in parallel. It can be seen that while the printing stations 106 have a stationary printing duration of 0.8 seconds and a time to index between printing stations of 0.4 seconds, the apparatus is capable of providing a throughput of 2 containers per 1.2 seconds, equivalent to 100 containers per minute.

Details of the process timings for each stage of the sequence are given in Table A.

**Table A:**

| | Process step | Distance [m] | Simultaneous process step | Distance [m] |
|---|---|---|---|---|
| | | Duration [s] | | Duration [s] |
| 1 | Empty carriage **A** arrives at **Loading** station. | | | |
| 2 | Carriage A at Loading station while object A is loaded onto holder A. Object A subsequently remains on holder A for entire machine sequence. | 0.0m | | |
| | | 0.3s | | |
| 3 | Move carriage **A** to **Inspection** station. | 0.1m | Empty carriage **B** arrives at **Loading** | |
| | | 0.3s | station. | |
| 4 | Carriage A at Inspection station while object A is rotated and examined for defects. If a defect is found the object is ejected from its holder and the carriage continues its sequence with an empty holder. | 0.0m | Carriage B at Loading station while object B is loaded onto holder B. Object B subsequently remains on holder B for entire machine sequence. | 0.0m |
| | | 0.3s | | 0.3s |
| 5 | Move Carriage **A** to **Idle** position. | 0.1m | Move carriage **B** to **Inspection** station. | 0.1m |
| | | 0.3s | | 0.3s |
| 6 | Carriage A at Idle position. | 0.0m | Carriage B at Inspection station while object B is rotated and examined for defects. If a defect is found the object is ejected from its holder and the carriage continues its sequence with an empty holder. | 0.0m |
| | | 0.3s | | 0.3s |
| 7 | Move Carriage **A** through Print 1(i) station without stopping to **Print 1(ii)** station. | 0.2m | Move Carriage **B** without stopping through Idle position to **Print 1(i)** station. | 0.2m |
| | | 0.4s | | 0.4s |
| 8 | Carriage A at Print 1 (ii) station while object A is rotated and printed onto. | 0.0m | Carriage B at Print 1 (i) station while object B is rotated and printed onto. | 0.0m |
| | | 0.8s | | 0.8s |
| 9 | Move Carriage **A** through Print 2(i) station without stopping to **Print 2(ii)** station. | 0.2m | Move Carriage **B** through Print 1 (ii) station without stopping to **Print 2(i)** station. | 0.2m |
| | | 0.4s | | 0.4s |
| 10 | Carriage A at Print 2(ii) station while object A is rotated and printed onto. | 0.0m | Carriage B at Print 2(i) station while object B is rotated and printed onto. | 0.0m |
| | | 0.8s | | 0.8s |
| 11 | Move Carriage **A** through Print 3(i) station without stopping to **Print 3(ii)** station. | 0.2m | Move Carriage **B** through Print 2(ii) station without stopping to **Print 3(i)** station. | 0.2m |
| | | 0.4s | | 0.4s |
| 12 | Carriage A at Print 3(ii) station while object A is rotated and printed onto. | 0.0m | Carriage B at Print 3(i) station while object B is rotated and printed onto. | 0.0m |
| | | 0.8s | | 0.8s |
| 13 | Move Carriage **A** through Print 4(i) station without stopping to **Print 4(ii)** station. | 0.2m | Move Carriage **B** through Print 3(ii) station without stopping to **Print 4(i)** station. | 0.2m |
| | | 0.4s | | 0.4s |
| 14 | Carriage A at Print 4(ii) station while object A is rotated and printed onto. | 0.0m | Carriage B at Print 4(i) station while object B is rotated and printed onto. | 0.0m |
| | | 0.8s | | 0.8s |
| 15 | Move Carriage **A** to start of **Drying** station. | 0.6m | Move Carriage B through Print 4(ii) station without stopping to between Print 4(ii) station and start of Drying station | 0.2m |
| | | 1.2s | | 0.4s |
| | | | Move Carriage B to start of **Drying** station | 0.5m |
| | | | | 1.4s |
| 16 | Move carriage A through Drying station at constant speed while rotating object A. | 0.5m | Move carriage B through Drying station at constant speed while rotating object B. | 0.5m |
| | | 2.5s | | 2.5s |
| 17 | Move Carriage **A** to **OPV** station. | 0.2m | | 0.2m |
| | | 0.2s | | 0.2s |
| 18 | Carriage A at OPV station while object A is rotated and coated with OPV. | 0.0m | Move Carriage **B** to **OPV** station. | |
| | | 0.4s | | |
| 19 | Move carriage **A** to **Unloading** station | 0.2m | | |
| | | 0.2s | | |
| 20 | Carriage A at Unload station while object A is unloaded from holder A. | 0.0m | Carriage B at OPV station while object B is rotated and coated with OPV. | 0.0m 0.4s |
| | | 0.3s | | |
| | Move carriage **A** to **Loading** station | 0.5m | | |
| | | 1.0s | Move carriage **B** to **Unloading** station | 0.2m |
| | | | | 0.2s |
| | | | Carriage B at Unload station while object B is unloaded from holder B. | 0.0m |
| | | | | 0.3s |
| | | | Move carriage **B** to **Loading** station | 0.5m |
| | | | | 1.0s |

It should be understood that when reference is made to an object or carriage being stationary, this refers to the position of the carriage 104 along the track 102. The skilled person will understand that the term "stationary" in this context includes the possibility of other motions, including rotation of a handling device of the carriage and of the object about its axis.

The above example provides a detailed account of one scheme of parallel processing according to the present invention. It will be understood by the skilled person that the above described concepts can be applied to a wide range of printing apparatuses with differing functional requirements. The number of processes and parallel operations will depend on the individual requirements of the apparatus.

For example, in another embodiment, pairs of objects to be printed could be loaded in parallel, inspected in series and then printed three at a time. In general, parallel processing can be made most efficient when the ratio of the durations of each operation most closely matches the ratio of the number of parallel stations provided for each operation.

Furthermore, a system as described above, having independent control of the movement of objects and having replicated processing stations, provides redundancy that allows selected processing stations to be passed through without processing, during, for example, maintenance, servicing or replacement of a processing station, without interrupting operation of the apparatus.

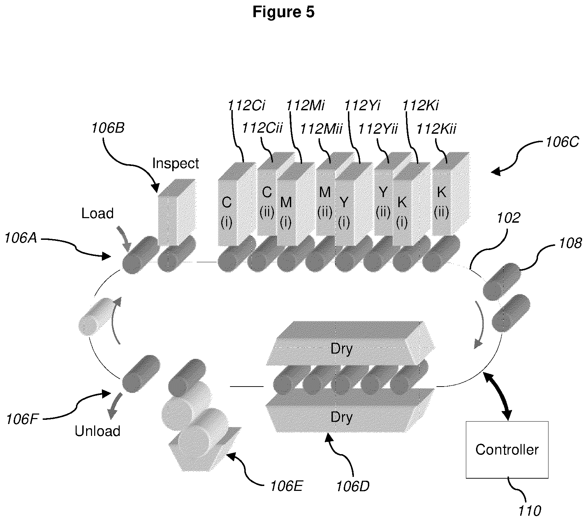

Figure 5 shows an apparatus in which the same set of eight printing stations 106C used in the apparatus of Figure 3 may be configured in an alternative way to increase the width of the print area rather than the throughput of the machine. In this embodiment, for each pair of printheads 112, the first and second printheads are offset to each other in a direction parallel to the axes of the objects to be printed by a distance of less than or equal to the print width from a single printhead 106C. An object is indexed through all eight printing stations, receiving a colour print process. The resulting print on the object is up to twice the width of a single printhead 106C.

Figures 6A and 6B show an example of a magnetic rotation coupling system 600 of a type that can be used at a processing station to drive the object handling devices 104 of the above described examples. The coupling system comprises a driving device 610 (shown in Figure 6A) having a drive disc 601 that is rotated by a motor (not shown). The driving device 610 is located at a processing station to drive a passive coupling disc 603 that forms part of the movable carrying device 104.

In this example, the coupling comprises two non-magnetic discs, a drive disc 601 at the processing station and a driven disc 603 on the carriage 104. The two non-magnetic discs, 601 and 603, carry permanent magnets, 604, inset into the facing surfaces of the discs, 601 and 603, in complementary patterns. When the axes of the two discs, 601 and 603, are brought into alignment by the carriage 104 arriving at the processing station, the driven disc 603 angle self-aligns to the drive disc 601 angle thereby synchronising its rotation to the rotation of the drive disc 601.

An advantage of using a driving system that is separate from the carriages is that the carriages do not require any electrical connections. The handling devices are passive devices in which controlled rotation of the container is achieved via a coupling from a drive device located at a processing station where rotation of the object to be printed is required. The absence of electrical connections in the carriages substantially reduces the difficulty of designing a suitable apparatus in which the carriages can independently move around a track.

The following are particularly preferred aspects according to the present disclosure.
Clause 1. A printing apparatus for printing onto objects, the apparatus comprising:
   a plurality of carrying devices for carrying objects to be printed on, the carrying devices each comprising a rotatable handling device configured to hold and rotate an object;
   a track defining a path along which each of the plurality of carrying devices can be moved;
   a plurality of processing stations arranged along the track and comprising at least one printing station; and
   a controller configured to independently control the position and speed of each of the carrying devices with respect to the track, wherein the handling device is arranged to rotate an object at at least one of the plurality of processing stations by coupling to a driving device disposed at the at least one processing station such that torque is transmitted from the driving device to the handling device.
Clause 2. The printing apparatus of clause 1, wherein the controller is configured to allow at least one of the plurality of carrying devices to be moved with a first speed, which may be zero speed, on the track while at least one other of the plurality of carrying devices is moved with a second speed on the track, wherein the second speed is not equal to the first speed.
Clause 3. The printing apparatus of clauses 1 or 2, wherein the plurality of processing stations further comprises one or more of: at least one drying station, at least one loading station, and at least one unloading station.
Clause 4. The printing apparatus of clauses 2 or 3, wherein the controller is configured to control the position and speed of each carrying device such that each carrying device is stationary or moved at a first speed while an object is printed on at the at least one printing station, and each carrying device is moved at a second speed through the at least one drying station, wherein the second speed is not equal to the first speed.
Clause 5. The printing apparatus of clauses 2 to 4, wherein the controller is configured to allow one of the plurality of carrying devices to be stationary or move at a first speed at a printing station while another of the plurality of carrying devices is moved at a second speed through a drying station.
Clause 6. The printing apparatus of any preceding clause, comprising a rail or pad mounted adjacent to the track and wherein the handling device comprises a wheel configured to contact the rail or pad as it moves along the track, thereby causing the handling device to rotate as it is moved along the track.
Clause 7. The printing apparatus of any preceding clause wherein the track forms a closed path on which the carrying devices can be moved.
Clause 8. The printing apparatus of any preceding clause, wherein at least one of the processing stations is repeated on the track, thereby allowing multiple objects at different positions on the track to undergo the same process simultaneously.
Clause 9. The printing apparatus of clause 8, wherein the controller is configured to move at least one carrying device such that it passes through, without processing, a first of a repeated processing station at which the carried object would normally be processed, and instead be processed at a second of the repeated processing station of the same type, thereby allowing the first processing station to be inoperative without interrupting operation of the apparatus.
Clause 10. The printing apparatus of any preceding clause, wherein the plurality of processing stations comprises at least two printing stations that are disposed parallel to each other but positioned to be offset along their axis of printing.
Clause 11. A method of using the printing apparatus of any preceding clause, the method comprising moving a first carrying device along the track at a first processing station while a second carrying device remains stationary at a second processing station, wherein both carrying devices are disposed on the same track.
Clause 12. A method of moving objects along a track during a printing process, the method comprising:
   moving, along a track, a first carrying device configured to carry a first object into the vicinity of a first processing station configured to perform a first process;
   moving, along the track, the first carrying device into an idle position, while moving a second carrying device configured to carry a second object into the vicinity of the first processing station;
   moving, along the track, the first carrying device to a second processing station configured to perform a second process, while at the same time moving the second carrying device to a third processing station also configured to perform the second process.
Clause 13. The method of clause 12, wherein the duration of the second process is greater than the duration of the first process.
Clause 14. The method of clause 12 or 13 further comprising moving a third carrying device configured to carry a third object from the vicinity of the first processing station into the idle position, while the first and second carrying devices remain at the second and third processing stations respectively.
Clause 15. The method of any of clauses 12 to 14, wherein the first process comprises at least one of: loading, inspecting, unloading, cleaning, surface energy modifying, printing, coating, drying, curing or fixing an object carried by a carrying device, and, preferably, wherein the second and third processing stations are printing stations and the second process comprises printing a single colour onto the surface of the object.
Clause 16. The method of clause 15, further comprising keeping the first and second carrying devices at the second and third processing stations while first and second objects held by the respective carrying devices are printed on.
Clause 17. The method of clause 16, further comprising:
   moving the first and second carrying devices together into fourth and fifth processing stations each configured to perform a printing operation with the same single colour as each other, wherein the colour is not the same as the colour printed in the second and third processing stations; and
   printing onto the first and second objects held by the first and second carrying devices.
Clause 18. The method of any of clauses 12-17, wherein the track is a closed track.
Clause 19. A method of operating an apparatus comprising: a plurality of carrying devices for carrying objects to be printed on, the carrying devices each comprising a rotatable handling device configured to hold and rotate an object; a track defining a path along which each of the plurality of carrying devices can be moved; a controller configured to independently control the position and speed of each of the carrying devices with respect to the track; and a plurality of processing stations arranged along the track and comprising at least one printing station, wherein at least one of the processing stations is repeated on the track, the method comprising:
   moving at least one carrying device such that it passes through, without processing, a first of a repeated processing station at which the carried object would normally be processed, and instead be processed at a second of the repeated processing station of the same type, thereby allowing the first processing station to be inoperative without interrupting operation of the apparatus.

## Claims

1. A method of moving objects (108) along a track (102) during a printing process, the method comprising:
moving, along a track (102), a first carrying device (104) configured to carry a first object (108) into the vicinity of a first processing station (106) configured to perform a first process;
moving, along the track (102), the first carrying device (104) into an idle waiting area (402), while moving a second carrying device (104) configured to carry a second object (108) into the vicinity of the first processing station (106); and
moving, along the track (102), the first carrying device (104) to a second processing station (106) configured to perform a second process, while at the same time moving the second carrying device (104) to a third processing station (106) also configured to perform the second process.

2. The method of claim 1, wherein the duration of the second process is greater than the duration of the first process.

3. The method of claim 1 or 2, further comprising moving a third carrying device (104) configured to carry a third object (108) from the vicinity of the first processing station (106) into the idle waiting area (402), while the first and second carrying devices (104) remain at the second and third processing stations (106) respectively.

4. The method of any preceding claim, wherein the first process comprises at least one of: loading, inspecting, unloading, cleaning, surface energy modifying, printing, coating, drying, curing or fixing an object (108) carried by a carrying device (104), and, preferably, wherein the second and third processing stations (106) are printing stations and the second process comprises printing a single colour onto the surface of the object (108).

5. The method of claim 4, further comprising keeping the first and second carrying devices (104) at the second and third processing stations (106) while first and second objects (108) held by the respective carrying devices (104) are printed on.

6. The method of claim 5, further comprising:
moving the first and second carrying devices (104) together into fourth and fifth processing stations (106) each configured to perform a printing operation with the same single colour as each other, wherein the colour is not the same as the colour printed in the second and third processing stations (106); and
printing onto the first and second objects (108) held by the first and second carrying devices (104).

7. The method of any preceding claim, wherein the track (102) is a closed track.
